# EUROPEAN PATENT SPECIFICATION

(11) **EP 3 160 025 B1**
(45) Date of publication and mention of the grant of the patent: **05.09.2018**
(21) Application number: 14903057.9
(22) Date of filing: 26.12.2014
(51) Int. Cl.: H02M 1/42, H02M 5/458, H02H 7/122, H02M 5/451, H02M 7/5387

(54) **VOLTAGE SET-UP AUTOMATIC MATCHING CIRCUITS**
AUTOMATISCHE SPANNUNGSHOCHSETZANPASSUNGSSCHALTUNGEN
CIRCUITS ÉLÉVATEUR À ADAPTATION AUTOMATIQUE

(30) Priority: 30.09.2014 CN 201410521740
(43) Date of publication of application: 26.04.2017
(73) Proprietor: Guangdong BESTEK E-commerce Co., Ltd., Shenzhen, Guandong Province (CN)
(72) Inventor: XU, Xinhua, Shenzhen Guangdong 518000 (CN)
(74) Representative: Jeannet, Olivier
(86) International application number: PCT/CN2014/095207
(87) International publication number: WO 2016/049989

(56) References cited:
- CN-A- 101 325 367
- CN-A- 101 777 829
- CN-A- 102 594 174
- CN-A- 103 078 549
- CN-U- 203 104 332
- US-A1- 2006 175 983
- US-A1- 2013 249 397

## Description

### BACKGROUND

### 1. Technical Field

The present disclosure generally relates to a voltage step-up automatic matching circuit and a smart travel-use power conversion device.

### 2. Description of Related Art

Power circuits supply the power to electric equipment. Conventionally, the power circuits include alternating current (AC) power circuits and direct current (DC) power circuits. However, the voltages applicable for different areas and countries are different, but the nominal voltage of the electrical equipment may be the same. Thus, the electrical equipment cannot be directly adapted to the power supply in different countries. Generally, power conversion device has to be adopted to convert the power supply.

Currently, the power conversion devices convert one fixed power voltage into another fixed power voltage, such as converting the AC of 110V to the AC of 220V, so as to adapt to the power voltage of China standard. With respect to such power conversion device, the input end can only be applicable to one fixed voltage. In other words, the applicable range of such power conversion device is small, that is, only the one-to-one conversion is available, and thus is not convenient. A US publication No. 2006/175983A1 discloses a ballast including an alternating current (AC) input terminal 1, 2 connected to an external power supply 26 to input a first AC voltage within a predetermined voltage range; a rectifier filter circuit 14, 56 connected to the AC input terminal 1, 2 for rectifying and filtering waveforms of the first AC to form a direct current (DC); a switching circuit 58 connected to the rectifier filter circuit 14, 56, wherein in response to control signals from 96, the switching circuit 58 is turned on or off to output a first pulse voltage; a voltage step-up converter circuit 66, 68, 70 connected to the switching circuit 58 for performing a voltage step-up process toward the first pulse voltage so as to output a second pulse voltage; a PFC control circuit 96 connected to the switching circuit 58 and the voltage step-up converter circuit 66, 68, 70, wherein the PFC control circuit 96 is configured to control a pulse width of the first pulse voltage output by the switching circuit 58; a bridge inverter circuit 18 connected to the voltage step-up converter circuit 66, 68, 70, wherein the bridge inverter circuit 18 is configured to convert the second pulse voltage to a second AC; a capacitor C17 connected to the bridge inverter circuit 18 to output the second AC; and an inverter control circuit 122 connected to the capacitor C17 and the bridge inverter circuit 18, wherein the inverter control circuit 122 is configured to control a duty cycle ratio of outputted waveform 110 of the bridge inverter circuit18 so as to stabilize the second AC. A US publication No. 2013/279397A1 discloses a system including a digital electronic ballast integrated with PLCC modem 28 and PLCC concentrator; the digital electronic ballast being capable of monitoring and controlling operation of each of the HID lamp in the system; the PLCC concentrator located in AC Power line network and connected to each of the digital electronic ballast connected to the respective HID lamps in an AC power line network. Further, PLCC concentrator sends the command signals such as lamp ON/OFF, lamp dimming, lamp scheduling rules to the digital electronic ballast. The PLCC concentrator also receives lamp status, real time electric parameters, failure information, end of lamp life (EOLL) or lamp burning hours, temperature conditions and warning from the digital electronic ballast thereby the PLCC concentrator provide reports to a server to enable remote monitoring of the network.

### SUMMARY

The disclosure relates to a voltage step-up automatic matching circuit and a smart travel-use power conversion device.

In one aspect, as set forth in claim 1, a voltage step-up automatic matching circuit includes: an alternating current (AC) input terminal connected to an external power supply to input a first AC within a predetermined voltage range; a rectifier filter circuit connected to the AC input terminal for rectifying and filtering waveforms of the first AC to form a direct current (DC); a switching circuit connected to the rectifier filter circuit, wherein in response to control signals, the switching circuit is turned on or off to output a first pulse voltage; a voltage step-up converter circuit connected to the switching circuit for performing a voltage step-up process toward the first pulse voltage so as to output a second pulse voltage; a PFC control circuit connected to the switching circuit and the voltage step-up converter circuit, wherein the PFC control circuit is configured to control a pulse width of the first pulse voltage output by the switching circuit; a bridge inverter circuit connected to the voltage step-up converter circuit, wherein the bridge inverter circuit is configured to convert the second pulse voltage to a second AC; an alternating current output terminal connected to the bridge inverter circuit to output the second AC; and an inverter control circuit connected to the alternating current output terminal and the bridge inverter circuit, wherein the inverter control circuit is configured to control a duty cycle ratio of outputted waveform of the bridge inverter circuit so as to stabilize the second AC. Wherein the FPC control circuit includes: a voltage detection and feedback circuit connected to the voltage step-up converter circuit, wherein the voltage detection and feedback circuit is configured to detect the second pulse voltage so as to generate a feedback voltage; an over-current detection circuit connected to the switching circuit, wherein over-current detection circuit is configured to detect a current output by the switching circuit so as to generate a feedback current; and a PFC controller comprising a feedback terminal connected to the voltage detection and feedback circuit, a current detection terminal connected to the over-current detection circuit, and a control terminal connected to the switching circuit, wherein in light of the feedback current and the feedback voltage, the PFC controller is configured to output the control signals to control a pulse width of the first pulse voltage. Wherein the switching circuit comprises a MOS transistor and a switch driving circuit, wherein a drain of the MOS transistor is connected to a positive output terminal of the rectifier filter circuit via a voltage step-up inductor, a gate of the MOS transistor is connected to the control terminal of the PFC controller via the switch driving circuit, and a source of the MOS transistor is connected to a negative output terminal of the rectifier filter circuit via a third sampling resistor. Wherein the switching circuit comprises a resistor, the switch driving circuit comprises a diode, a resistor and a PNP transistor, and an end of the resistor is connected to a cathode of the diode and an emitter of the PNP transistor.

In a preferred embodiment, the inverter control circuit includes: an output voltage detection circuit connected to the AC output terminal to sample voltages of the second AC so as to generate a first sampling voltage; an output current detection circuit connected to the AC output terminal to sample currents of the second AC so as to generate a first sampling current; and an inverter controller connected to the output voltage detection circuit, the output voltage detection circuit, and the bridge inverter circuit, wherein in light of the first sampling voltage and the first sampling current, the inverter controller is configured to control a duty cycle ratio of outputted waveform of the bridge inverter circuit so as to stabilize the second AC.

In a preferred embodiment, the voltage step-up converter circuit comprises a voltage step-up diode, a voltage step-up DC filter capacitor, and the voltage step-up inductor, wherein an anode of the voltage step-up diode is connected to the drain of the MOS transistor, a cathode of the voltage step-up diode is connected to a positive pole of the voltage step-up DC filter capacitor and the bridge inverter circuit, a negative pole of the voltage step-up DC filter capacitor is grounded.

In a preferred embodiment, the PFC controller comprises a PFC control chip, wherein an INV pin and a COMP pin of the PFC control chip is the feedback terminal of the PFC controller, a CS pin of the PFC control chip is the current detection terminal of the PFC controller; the voltage detection and feedback circuit comprises a voltage sampling circuit, a forty-first resistor, an eighth capacitor, and a ninth capacitor, wherein the INV pin of the PFC control chip is connected to the voltage step-up converter circuit via the voltage sampling circuit, an end of the forty-first resistor is connected to the INV pin of the PFC control chip, another end of the forty-first resistor is connected to the COMP pin of the PFC control chip via the ninth capacitor, the eighth capacitor is connected between the INV pin of the PFC control chip and the COMP pin of the PFC control chip.

In a preferred embodiment, the over-current detection circuit comprises a forty-second resistor, a third capacitor, and the third sampling resistor, wherein an end of the forty-second resistor is connected to the CS pin of the FC control chip, another end of the forty-second resistor is connected to the source of the MOS transistor, the CS pin of the FC control chip is grounded via the third capacitor.

In a preferred embodiment, the bridge inverter circuit comprises an inverter-bridge having a first MOS transistor, a second MOS transistor, a third MOS transistor, and a fourth MOS transistor, wherein gates of the first MOS transistor, the second MOS transistor, the third MOS transistor, and the fourth MOS transistor respectively are connected to one MOS driving circuit, and the MOS driving circuit is connected to a corresponding control end of the inverter controller; a source of the second MOS transistor is a fire-wire end of the AC output terminal, and a source of the third MOS transistor is a zero-line end of the AC output terminal.

In a preferred embodiment, the output current detection circuit comprises a second resistor and a second sampling resistor; wherein an end of the second resistor is connected to sources of the first MOS transistor and the fourth MOS transistor, and another end of the second resistor is connected to the inverter controller; and wherein an end of the second sampling resistor is connected to the sources of the first MOS transistor and the fourth MOS transistor, and another end of the second sampling resistor is grounded.

As a preferred example, a smart travel-use power conversion device incorporates the above voltage step-up automatic matching circuit.

In view of the voltage step-up automatic matching circuit and the smart travel-use power conversion device, the AC input terminal 10 inputs the first DC within a predetermined voltage range, i.e., AC90-265V. The rectifier filter circuit 20 rectifies and filters the waveforms to form the DC. Under the control of the PFC control circuit, the switching circuit 30 outputs the DC via the pulse format so as to output the first pulse voltage. The first pulse voltage is then applied with the voltage step-up process by the voltage step-up converter circuit 40 to generate the second pulse voltage. The second pulse voltage is then converted by the bridge inverter circuit 60 and is applied with a PWM adjustment by the inverter control circuit so as to output a stable second AC, i.e., which is generally around 220V. Thus, the wide voltage may be stepped up. As the input end may be the AC within the predetermined voltage range, such solution may be applicable to a large scope, such as being incorporated into a smart travel-use power conversion device.

### BRIEF DESCRIPTION OF THE DRAWINGS

FIG. 1 is a circuit diagram of a voltage step-up automatic matching circuit in accordance with one embodiment.
FIG. 2 is a circuit diagram of the voltage step-up automatic matching circuit in accordance with one embodiment.

The implementation, the features, and the advantages of the claimed invention will be described by the embodiments together with the accompanying drawings.

### DETAILED DESCRIPTION

The disclosure is illustrated by way of example and not by way of limitation in the figures of the accompanying drawings, in which like reference numerals indicate similar elements. The embodiments described in accordance with the drawings are only examples, and thus the claimed invention is not limited thereto.

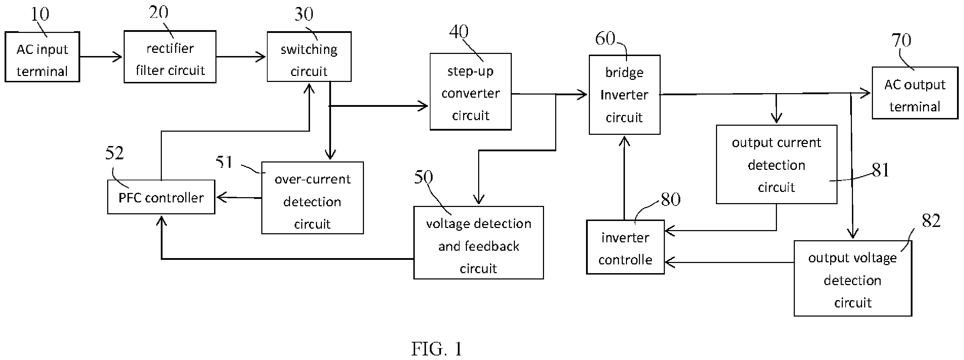

Referring to FIG. 1, the voltage step-up automatic matching circuit includes an alternating current (AC) input terminal 10, a rectifier filter circuit 20, a switching circuit 30, a voltage step-up converter circuit 40, a PFC control circuit, a bridge inverter circuit 60, an AC output terminal 70, and an inverter control circuit.

Specifically, the AC input terminal 10 is connected to an external power supply to input a first AC within a predetermined voltage range. For instance, the predetermined voltage range may be from AC 90 to AC 265V, that is, the wide voltage range is from AC 90 to AC 265V. In detail, the first AC is AC 110V The rectifier filter circuit 20 is connected to the AC input terminal 10 for rectifying and filtering waveforms of the first AC to form a direct current (DC). The switching circuit 30 is connected to the rectifier filter circuit 20, and in response to control signals, the switching circuit 30 is turned on or off to output a first pulse voltage. That is, when the switching circuit 30 in an on or off state, the switching circuit 30 outputs a DC pulse, which is the above first pulse voltage. The voltage step-up converter circuit 40 is connected to switching circuit 30for performing a voltage step-up process toward the first pulse voltage so as to output a second pulse voltage. The PFC control circuit is connected to the switching circuit 30 and the voltage step-up converter circuit 40. The PFC control circuit is configured to control a pulse width of the first pulse voltage output by the switching circuit 30.

The bridge inverter circuit 60 is connected to the voltage step-up converter circuit 40. The bridge inverter circuit 60 is configured to convert the second pulse voltage to a second AC. The alternating current output terminal 70 is connected to the bridge inverter circuit 60 to output the second AC. The second AC is a stable and fixed voltage, such as AC 220V. The inverter control circuit is connected to the alternating current output terminal 70 and the bridge inverter circuit 60. The inverter control circuit is configured to control a duty cycle ratio of outputted waveform of the bridge inverter circuit 60 so as to stabilize the second AC.

In one embodiment, the AC input terminal 10 inputs the first AC within the predetermined voltage range, i.e., AC90-265V. The rectifier filter circuit 20 rectifies and filters the waveforms of the first AC to form the DC. Under the control of the PFC control circuit, the switching circuit 30 outputs the DC via a pulse format so as to output the first pulse voltage. The first pulse voltage is then applied with the voltage step-up process by the voltage step-up converter circuit 40 to generate the second pulse voltage. The second pulse voltage is then converted by the bridge inverter circuit 60 and is applied with a PWM adjustment by the inverter control circuit so as to output a stable second AC, i.e., which is generally around 220V. Thus, the wide voltage may be stepped up. As the input end may be the AC within the predetermined voltage range, such solution may be applicable to a large scope, such as being incorporated into a smart travel-use power conversion device.

In one embodiment, the PFC control circuit comprises a voltage detection and feedback circuit 50, an over-current detection circuit 51, and a PFC controller 52. The voltage detection and feedback circuit 50 is connected to the voltage step-up converter circuit 40.The voltage detection and feedback circuit 50 is configured to detect the second pulse voltage so as to generate a feedback voltage. The over-current detection circuit 51 is connected to the switching circuit 30, wherein over-current detection circuit 51 is configured to detect a current output by the switching circuit 30 so as to generate a feedback current. The PFC controller 52 comprises a feedback terminal connected to voltage detection and feedback circuit 50, a current detection terminal connected to the over-current detection circuit 51, and a control terminal connected to the switching circuit 30. In light of the feedback current and the feedback voltage, the PFC controller 52 is configured to output the control signals to control a pulse width of the first pulse voltage.

In one embodiment, the inverter control circuit includes an output voltage detection circuit 82, an output current detection circuit 81, and an inverter controller 80. The output voltage detection circuit 82 is connected to the AC output terminal 70 to sample voltages of the second AC so as to generate a first sampling voltage. The output current detection circuit 81 is connected to the AC output terminal 70 to sample currents of the second AC so as to generate a first sampling current. The inverter controller 80 is connected to the output voltage detection circuit 82, the output current detection circuit 81, and the bridge inverter circuit 60. In light of the first sampling voltage and the first sampling current, the inverter controller 80 is configured to control a duty cycle ratio of outputted waveform of the bridge inverter circuit 60 so as to stabilize the second AC.

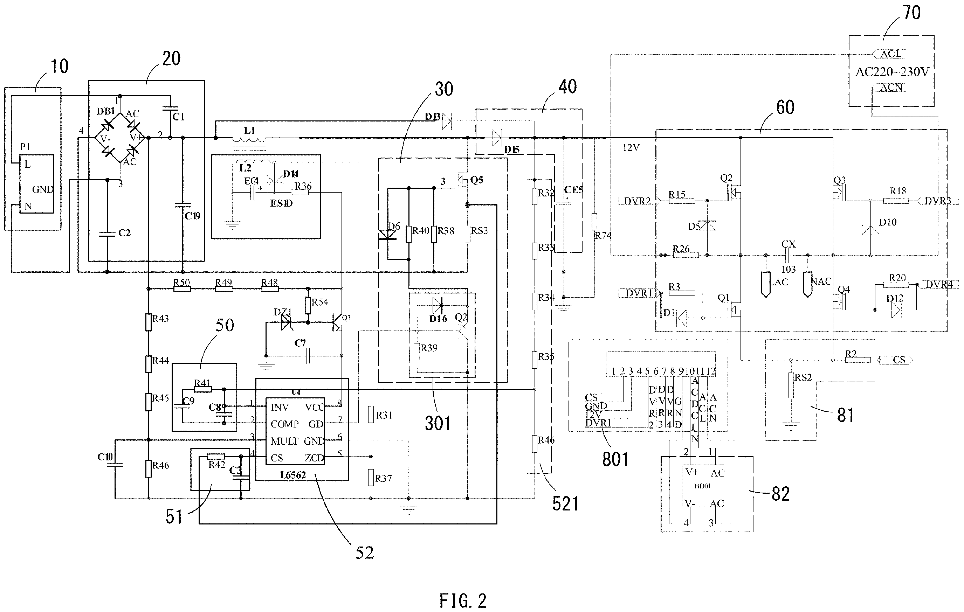

As shown in FIG. 2, in one embodiment, the rectifier filter circuit 20 includes a rectifying bridge BD1 including four diodes and a filtering capacitor C19. An input end AC of the rectifying bridge BD1 is connected to the AC input terminal 10, and a positive output terminal V+ of the rectifying bridge BD1 is connected to a positive pole of the filtering capacitor C19, and a positive output terminal V- of the rectifying bridge BD1 is connected to a negative pole of the filtering capacitor C19, wherein the first AC inputted from the AC input terminal 10 is rectified by the rectifying bridge (BD1), and is filtered by the filtering capacitor (C1) to form the DC.

The switching circuit 30 includes a MOS transistor Q5 and a switch driving circuit 301. A drain of the MOS transistorQ5 is connected to a positive output terminal V+ of the rectifier filter circuit 20 via a voltage step-up inductorL1, a gate of the MOS transistor Q5 is connected to the control terminal of the PFC controller 52 via the switch driving circuit 301, and a source of the MOS transistor Q5 is connected to a negative output terminal V- of the rectifier filter circuit 20 via a third sampling resistor RS3. That is to say, the MOS transistor Q5 receives the control signals from the PFC controller 52 so as to be turned on or off to output the above first pulse voltage. In addition, the switching circuit 30 includes a diode D6 and a resistor R40connected with the diode D6 in parallel, the switch driving circuit 301 includes a diode D16 and a triode Q2, and a cathode of the diode D6 and an end of the resistor R40 are connected to a cathode of the diode D16 and an emitter of the PNP transistor Q2.

The voltage step-up converter circuit 40 comprises a voltage step-up diodeD15, a voltage step-up DC filter capacitorCE5, and the voltage step-up inductor L1, wherein an anode of the voltage step-up diode D15is connected to the drain of the MOS transistor Q5, a cathode of the voltage step-up diode D15 is connected to a positive pole of the voltage step-up DC filter capacitor CE5 and the bridge inverter circuit 60, a negative pole of the voltage step-up DC filter capacitor CE5 is grounded. The voltage step-up inductorL1, the voltage step-up diodeD15, and the voltage step-up DC filter capacitor CE5 can perform a DC-DC voltage step-up converter process toward the first pulse voltage output by the switching circuit 30 so as to output the second pulse voltage.

The PFC controller 52 comprises a PFC control chip U4, i.e., L6562. An INV pin and a COMP pin of the PFC control chip U4 are the feedback terminal of the PFC controller 52, and a CS pin of the PFC control chip U4 is the current detection terminal of the PFC controller 52. The voltage detection and feedback circuit 50 comprises a voltage sampling circuit 521, a forty-first resistorR41, an eighth capacitor C8 and a ninth capacitor C9, wherein the INV pin of the PFC control chip U4is connected to the voltage step-up converter circuit 40 via the voltage sampling circuit 521. An end of the forty-first resistor R41 is connected to the INV pin of the PFC control chip U4, and another end of the forty-first resistor R41 is connected to the COMP pin of the PFC control chip U4 via the ninth capacitor C9. The eighth capacitor C8 is connected between the INV pin of the PFC control chip U4 and the COMP pin of the PFC control chip U4. The voltage sampling circuit 521 samples voltage from an output terminal of the voltage step-up converter circuit 40, and the sampled feedback voltage is input to the INV pin of the PFC control chip U4. Furthermore, a seventh pin of the PFC control chip U4 is connected to an end of a resistorR39 and an anode of the diode D16. when an output of a seventh pin of the PFC control chip U4 is high level, the high level passes through the diode D16 and resistor R40 to rapidly enable the MOS transistor Q5 to be turned on; when the output of the seventh pin of the PFC control chip U4 is low level, the PNP transistor Q2 is turned on, and the low level passes through the diode D6 and resistor R40 to rapidly enable the MOS transistor Q5 to be turned off. That is to say, when the output of the seventh pin of the PFC control chip U4 is high level, the MOS transistor Q5 is turned on; when the output of the seventh pin of the PFC control chip U4 is low level, the MOS transistor Q5 is turned off.

Specifically, the voltage sampling circuit 521 includes a thirty-second resistor R32, a thirty-third resistor R33, a thirty-forth resistor R34, a thirty-fifth resistor R35, and a forty-sixth resistor R46 which are connected in series. The thirty-second resistor R32 is connected to the cathode of the voltage step-up diode D15. The INV pin of the PFC control chip U4 is connected to the thirty-fifth resistor R35 and the forty-sixth resistor R46. The voltages of the thirty-second resistor R32, the thirty-third resistor R33, the thirty-forth resistor R34, the thirty-fifth resistor R35, and the forty-sixth resistor R46 are divided, and one voltage value is obtained from the thirty-fifth resistor R35 and the forty-sixth resistor R46. The voltage value is acted as a feedback voltage to be input into the INV pin of the PFC control chip U4.

A VCC pin of the PFC control chip U4 is connected to an auxiliary power supply having an induction coil L2, a fourteen diode D14, a filter capacitor EC 4, and a thirty-sixth resistor R36, and induces an induced voltage from the voltage step-up inductor L1 via the induction coil L2. The induced voltage is rectified by the fourteen diode D14 and filtered by the filter capacitor EC 4 to provide a working voltage for the PFC control chip U4. A GD pin is the control terminal of the PFC controller 52 so as to output the control signals to control that the MOS transistor Q5 is turned on or off via the switch driving circuit 301 being connected to the gate of the MOS transistor Q5. A GND pin is grounded. A ZCD pin is connected to the induction coil L2 via a thirty-first resistor R31, and is grounded via a thirty-seventh resistorR37.A MUL/T pin is connected to the positive output terminal V+ of the rectifier filter circuit 20 via a forty-fifth resistor R 45, a forty-forth resistor R44, and a forty-third resistor R 43 which are connected in series, and is grounded via the forty-sixth resistor R46.

The over-current detection circuit 51 comprises a forty-second resistor R42, a third capacitor C3, and the third sampling resistor RS3. Wherein an end of the forty-second resistor R42 is connected to the CS pin of the PFC control chip U4, another end of the forty-second resistor R42 is connected to the source of the MOS transistor Q5, and the CS pin of the PFC control chip U4 is grounded via the third capacitor C3. The over-current detection circuit 51 obtains a feedback current via the source of the MOS transistor Q5, and the feedback current is input to the PFC control chip U4 via the CS pin of the PFC control chip U4.

The bridge inverter circuit 60 comprises an inverter-bridge having a first MOS transistor Q1, a second MOS transistor Q2, a third MOS transistor Q3, and a fourth MOS transistor Q4. Gates of the first MOS transistor Q1, the second MOS transistor Q2, the third MOS transistor Q3, and the fourth MOS transistor Q4 respectively are connected to one MOS driving circuit, and the MOS driving circuit is connected to a corresponding control end of the inverter controller 80. A source of the second MOS transistor Q2 is a fire-wire end ACL of the AC output terminal 70, and a source of the third MOS transistor Q3 is a zero-line end ACN of the AC output terminal 70. Wherein, the inverter-bridge converts the second pulse voltage output by the voltage step-up converter circuit 40 to a second AC voltage, and the second AC voltage is output via the alternating current output terminal 70 so as to supply power to electronic products.

The inverter controller 80 includes a inverter controller interface terminal 801 having connecting ends, including DVR1, DVR2, DVR3, DVR4, ACDCIN, GND, ACN, ACL, CS. The connecting ends DVR1, DVR2, DVR3, DVR4 are control terminals, and are connected to the MOS driving circuits of the first MOS transistor, the second MOS transistor, the third MOS transistor, and the fourth MOS transistor, respectively.

The output current detection circuit 81 comprises a second resistor R2 and a second sampling resistor RS2; wherein an end of the second resistor R2 is connected to sources of the first MOS transistor Q1 and the fourth MOS transistor Q4, and another end of the second resistor R2 is connected to the CS connecting end of the inverter controller 80; and wherein an end of the second sampling resistor RS2 is connected to the sources of the first MOS transistor Q1 and the fourth MOS transistor Q4, and another end of the second sampling resistor RS2 is grounded.

The output voltage detection circuit 82 includes a rectifier chip BD01, wherein a AC pin of the rectifier chip BD01 is connected to fire-wire end ACL of the AC output terminal 70 and the ACL connecting end of the inverter controller interface terminal 801, and another AC pin of the rectifier chip BD01 is connected to the zero-line end ACN of the AC output terminal 70 and the ACN connecting end of the inverter controller interface terminal 801. An output terminal V+ of the DC is connected to the ACDCIN connecting end of the inverter controller interface terminal 801, and an output terminal V- of the DC is connected to the GND connecting end of the inverter controller interface terminal 801.

Basing on the above voltage step-up automatic matching circuit, the present disclosure also includes a smart travel-use power conversion device having the above voltage step-up automatic matching circuit.

In view of the voltage step-up automatic matching circuit and the smart travel-use power conversion device, the AC input terminal 10 inputs the first DC within a predetermined voltage range, i.e., AC90-265V. The rectifier filter circuit 20 rectifies and filters the waveforms of the first AC to form the DC. Under the control of the PFC control circuit, the switching circuit 30 outputs the DC via the pulse format so as to output the first pulse voltage. The first pulse voltage is then applied with the voltage step-up process by the voltage step-up converter circuit 40 to generate the second pulse voltage. The second pulse voltage is then converted by the bridge inverter circuit 60 and is applied with a PWM adjustment by the inverter control circuit so as to output a stable second AC, i.e., which is generally around 220V. Thus, the wide voltage may be stepped up. As the input end may be the AC within the predetermined voltage range, such solution may be applicable to a large scope, such as being incorporated into a smart travel-use power conversion device.

Although the features and elements of the present disclosure are described as embodiments in particular combinations, each feature or element can be used alone or in other various combinations within the principles of the present disclosure to the full extent indicated by the broad general meaning of the terms in which the appended claims are expressed.

## Claims

1. A voltage step-up automatic matching circuit, comprising:
an alternating current (AC) input terminal (10) connected to an external power supply to input a first AC within a predetermined voltage range;
a rectifier filter circuit (20) connected to the AC input terminal (10) for rectifying and filtering waveforms of the first AC to form a direct current (DC);
a switching circuit (30) connected to the rectifier filter circuit (20), wherein in response to control signals, the switching circuit (30) is turned on or off to output a first pulse voltage;
a voltage step-up converter circuit (40) connected to the switching circuit (30) for performing a voltage step-up process toward the first pulse voltage so as to output a second pulse voltage;
a PFC control circuit connected to the switching circuit (30) and the voltage step-up converter circuit (40), wherein the PFC control circuit is configured to control a pulse width of the first pulse voltage output by the switching circuit;
a bridge inverter circuit (60) connected to the voltage step-up converter circuit (40), wherein the bridge inverter circuit (60) is configured to convert the second pulse voltage to a second AC; an alternating current output terminal (70) connected to the bridge inverter circuit (60) to output the second AC; and
an inverter control circuit connected to the alternating current output terminal (70) and the bridge inverter circuit (60), wherein the inverter control circuit is configured to control a duty cycle ratio of outputted waveform of the bridge inverter circuit (60) so as to stabilize the second AC;
wherein the PFC control circuit comprising:
a voltage detection and feedback circuit (50) connected to the voltage step-up converter circuit (40), wherein the voltage detection and feedback circuit (50) is configured to detect the second pulse voltage so as to generate a feedback voltage;
an over-current detection circuit (51) connected to the switching circuit (30), wherein over-current detection circuit (51) is configured to detect a current output by the switching circuit (30) so as to generate a feedback current; and
a PFC controller (52) comprising a feedback terminal connected to the voltage detection and feedback circuit (50), a current detection terminal connected to the over-current detection circuit (51), and a control terminal connected to the switching circuit (30), wherein in light of the feedback current and the feedback voltage, the PFC controller (52) is configured to output the control signals to control a pulse width of the first pulse voltage;
**characterized in that**, the switching circuit (30) comprises a MOS transistor (Q5) and a switch driving circuit (301), wherein a drain of the MOS transistor (Q5) is connected to a positive output terminal of the rectifier filter circuit (20) via a voltage step-up inductor (L1), a gate of the MOS transistor (Q5) is connected to the control terminal of the PFC controller (52) via the switch driving circuit (301), and a source of the MOS transistor (Q5) is connected to a negative output terminal of the rectifier filter circuit (20) via a third sampling resistor (RS3), wherein the switching circuit (30) comprises a resistor (R40), the switch driving circuit (301) comprises a diode (D16) and a PNP transistor (Q2), and an end of the resistor (R40) is connected to a cathode of the diode (D16) and an emitter of the PNP transistor (Q2).

2. The voltage step-up automatic matching circuit as claimed in claim 1, **characterized in that** the inverter control circuit comprising:
an output voltage detection circuit (82) connected to the AC output terminal (70) to sample voltages of the second AC so as to generate a first sampling voltage;
an output current detection circuit (81) connected to the AC output terminal (70) to sample currents of the second AC so as to generate a first sampling current; and
an inverter controller (80) connected to the output voltage detection circuit (82), the output current detection circuit (81), and the bridge inverter circuit (60), wherein in light of the first sampling voltage and the first sampling current, the inverter controller is configured to control a duty cycle ratio of outputted waveform of the bridge inverter circuit (60) so as to stabilize the second AC.

3. The voltage step-up automatic matching circuit as claimed in claim 1, **characterized in that** the voltage step-up converter circuit (40) comprises a voltage step-up diode (D15), a voltage step-up DC filter capacitor (CE5), and the voltage step-up inductor (L1), wherein an anode of the voltage step-up diode (D15) is connected to the drain of the MOS transistor (Q5), a cathode of the voltage step-up diode (D15) is connected to a positive pole of the voltage step-up DC filter capacitor (CE5) and the bridge inverter circuit (60), a negative pole of the voltage step-up DC filter capacitor (CE5) is grounded.

4. The voltage step-up automatic matching circuit as claimed in claim 1, **characterized in that** the PFC controller (52) comprises a PFC control chip (U4), wherein an INV pin and a COMP pin of the PFC control chip (U4) is the feedback terminal of the PFC controller (52), a CS pin of the PFC control chip (U4) is the current detection terminal of the PFC controller (52);
the voltage detection and feedback circuit (50) comprises a voltage sampling circuit (521), a forty-first resistor (R41), an eighth capacitor (C8), and a ninth capacitor (C9), wherein the INV pin of the PFC control chip (U4) is connected to the voltage step-up converter circuit (40) via the voltage sampling circuit (521), an end of the forty-first resistor (R41) is connected to the INV pin of the PFC control chip (U4), another end of the forty-first resistor (R41) is connected to the COMP pin of the PFC control chip (U4) via the ninth capacitor (C9), the eighth capacitor (C8) is connected between the INV pin of the PFC control chip (U4) and the COMP pin of the PFC control chip (U4).

5. The voltage step-up automatic matching circuit as claimed in claim 4, **characterized in that** the over-current detection circuit (51) comprises a forty-second resistor (R42), a third capacitor (C3), and the third sampling resistor (RS3), wherein an end of the forty-second resistor (R42) is connected to the CS pin of the PFC control chip (U4), another end of the forty-second resistor (R42) is connected to the source of the MOS transistor (Q5), the CS pin of the PFC control chip (U4) is grounded via the third capacitor (C3).

6. The voltage step-up automatic matching circuit as claimed in claim 2, **characterized in that** the bridge inverter circuit (60) comprises an inverter-bridge having a first MOS transistor (Q1), a second MOS transistor (Q2), a third MOS transistor (Q3), and a fourth MOS transistor (Q4), wherein gates of the first MOS transistor (Q1), the second MOS transistor (Q2), the third MOS transistor (Q3), and the fourth MOS transistor (Q4) respectively are connected to one MOS driving circuit, and the MOS driving circuit is connected to a corresponding control end of the inverter controller (80);
a source of the second MOS transistor (Q2) is a fire-wire end of the AC output terminal (70), and a source of the third MOS transistor (Q3) is a zero-line end of the AC output terminal (70).

7. The voltage step-up automatic matching circuit as claimed in claim 2, **characterized in that** the output current detection circuit (81) comprises a second resistor (R2) and a second sampling resistor (RS2); wherein an end of the second resistor (R2) is connected to sources of the first MOS transistor (Q1) and the fourth MOS transistor (Q4), and another end of the second resistor (R2) is connected to the inverter controller (80); and wherein an end of the second sampling resistor (RS2) is connected to the sources of the first MOS transistor (Q1) and the fourth MOS transistor (Q4), and another end of the second sampling resistor (RS2) is grounded.

8. A smart travel-use power conversion device, **characterized in that** the smart travel-use power conversion device comprises the voltage step-up automatic matching circuit in any one of claims 1-7.

## Patentansprüche

1. Automatische Step-Up-Anpaßschaltung, umfassend:
eine Wechselstrom (AC)-Eingangsklemme (10), die an eine externe Energieversorgung angeschlossen ist, um einen ersten AC in einem vorgegebenen Spannungsbereich einzugeben;
eine an die AC-Eingangsklemme (10) angeschlossene Gleichrichterfilterschaltung (20) zur Gleichrichtung und Filterung von Wellenformen des ersten AC, um einen Gleichstrom (DC) zu bilden;
einen an die Gleichrichterfilterschaltung (20) angeschlossenen Schaltkreis (30), wobei der Schaltkreis (30) als Reaktion auf Steuerungssignale ein- oder ausgeschaltet wird, um eine erste Pulsspannung auszugeben;
eine an den Schaltkreis (30) angeschlossene Step-Up-Konverterschaltung (40), um die Spannung stufenweise auf die erste Pulsspannung zu erhöhen, um eine zweite Pulsspannung auszugeben;
eine an den Schaltkreis (30) und die Step-Up-Konverterschaltung (40) angeschlossene PFC-Schaltung, wobei die PFC-Schaltung derart konfiguriert ist, dass sie eine Pulsbreite der vom Schaltkreis ausgegebenen ersten Pulsspannung regelt;
eine an die Step-Up-Konverterschaltung (40) angeschlossene Brückenwechselrichterschaltung (60), wobei die Brückenwechselrichterschaltung (60) derart konfiguriert ist, dass sie die zweite Pulsspannung in einen zweiten AC umwandelt;
eine an die Brückenwechselrichterschaltung (60) angeschlossene Wechselstrom (AC)-Ausgangsklemme (70) zur Ausgabe des zweiten AC; und
einen an die AC-Ausgangsklemme (70) und die Brückenwechselrichterschaltung (60) angeschlossenen Wechselrichterregelkreis, wobei der Wechselrichterregelkreis derart konfiguriert ist, dass er ein Tastverhältnis der ausgegebenen Wellenform der Brückenwechselrichterschaltung (60) regelt, um den zweiten AC zu stabilisieren;
wobei die PFC-Schaltung umfasst:
eine an die Step-Up-Konverterschaltung (40) angeschlossene Spannungserkennungs- und Rückkopplungsschaltung (50), wobei die Spannungserkennungs- und Rückkopplungsschaltung (50) derart konfiguriert ist, dass sie die zweite Pulsspannung erkennt, um eine Rückkopplungsspannung zu erzeugen;
eine an den Schaltkreis (30) angeschlossene Überstromerkennungsschaltung (51), wobei die Überstromerkennungsschaltung (51) derart konfiguriert ist, dass sie einen vom Schaltkreis (30) ausgegebenen Strom erkennt, um einen Rückkopplungsstrom zu erzeugen; und
eine PFC-Steuerung (52), umfassend eine an die Spannungserkennungs- und Rückkopplungsschaltung (50) angeschlossene Rückkopplungsklemme, eine an die Überstromerkennungsschaltung (51) angeschlossene Stromerkennungsklemme und eine an den Schaltkreis (30) angeschlossene Regelklemme, wobei die PFC-Steuerung (52) derart konfiguriert ist, dass sie aufgrund des Rückkopplungsstroms und der Rückkopplungsspannung die Steuerungssignale ausgibt, um eine Pulsbreite der ersten Pulsspannung zu regeln;
**dadurch gekennzeichnet, dass** der Schaltkreis (30) einen MOS-Transistor (Q5) und eine Schalterantriebsschaltung (301) umfasst, wobei ein Drain des MOS-Transistors (Q5) über einen Step-Up-Induktor (L1) an eine positive Ausgangsklemme der Gleichrichterfilterschaltung (20) angeschlossen ist, ein Gate des MOS-Transistors (Q5) über die Schalterantriebsschaltung (301) an die Regelklemme der PFC-Schaltung (52) angeschlossen ist, und eine Source des MOS-Transistors (Q5) über einen 3. Abtastwiderstand (RS3) an eine negative Ausgangsklemme der Gleichrichterfilterschaltung (20) angeschlossen ist, wobei der Schaltkreis (30) einen Widerstand (R40) umfasst, die Schalterantriebsschaltung (301) eine Diode (D16) und einen PNP-Transistor (Q2) umfasst, und ein Ende des Widerstandes (R40) an eine Kathode der Diode (D16) und einen Emitter des PNP-Transistors (Q2) angeschlossen ist.

2. Anpaßschaltung nach Anspruch 1, **dadurch gekennzeichnet, dass** der Wechselrichterregelkreis umfasst:
eine an die AC-Ausgangsklemme (70) angeschlossene Ausgangsspannungserkennungsschaltung (82) zum Abtasten von Spannungen des zweiten AC, um eine erste Abtastspannung zu erzeugen;
eine an die AC-Ausgangsklemme (70) angeschlossene Ausgangsstromerkennungsschaltung (81) zum Abtasten von Strömen des zweiten AC, um einen ersten Abtaststrom zu erzeugen;
eine an die Ausgangsspannungserkennungsschaltung (82), die Ausgangsstromerkennungsschaltung (81) und die Brückenwechselrichterschaltung (60) angeschlossene Wechselrichtersteuerung (80), wobei die Wechselrichtersteuerung derart konfiguriert ist, dass sie aufgrund der ersten Abtastspannung des ersten Abtaststroms ein Abtastverhältnis der ausgegebenen Wellenform der Brückenwechselrichterschaltung (60) regelt, um den zweiten AC zu stabilisieren.

3. Anpaßschaltung nach Anspruch 1, **dadurch gekennzeichnet, dass** die Step-Up-Konverterschaltung (40) umfasst: eine Step-Up-Diode (D15), einen Step-Up-DC-Filterkondensator (CE5) und den Step-Up-Induktor (L1), wobei eine Anode der Step-Up-Diode (D15) an den Drain des MOS-Transistors (Q5) angeschlossen ist, eine Kathode der Step-Up-Diode (D15) an einen Pluspol des Step-Up-DC-Filterkondensators (CE5) und die Brückenwechselrichterschaltung (60) angeschlossen ist und ein Minuspol des Step-Up-DC-Filterkondensators (CE5) geerdet ist.

4. Anpaßschaltung nach Anspruch 1, **dadurch gekennzeichnet, dass** die PFC-Steuerung (52) einen PFC-Steuerungschip (U4) umfasst, wobei ein INV-Stift und ein COMP-Stift des PFC-Steuerungschips (U4) die Rückkopplungsklemme der PFC-Steuerung (52) ist, ein CS-Stift des PFC-Steuerungschips (U4) die Spannungserkennungsklemme der PFC-Steuerung (52) ist;
die Spannungserkennungs- und Rückkopplungsschaltung (50) eine Spannungsabtastschaltung (521), einen 41. Widerstand (R41), einen 8. Kondensator (C8) und einen 9. Kondensator (C9) umfasst, wobei der INV-Stift des PFC-Steuerungschips (U4) über die Spannungsabtastschaltung (521) an die Step-Up-Konverterschaltung (40) angeschlossen ist, ein Ende des 41. Widerstandes (R41) an den INV-Stift des PFC-Steuerungschips (U4) angeschlossen ist, ein anderes Ende des 41. Widerstandes (R41) über den 9. Kondensator (C9) an den COMP-Stift des PFC-Steuerungschips (U4) angeschlossen ist, der 8. Kondensator (C8) zwischen dem INV-Stift des PFC-Steuerungschips (U4) und dem COMP-Stift des PFC-Steuerungschips (U4) angeschlossen ist.

5. Anpaßschaltung nach Anspruch 4, **dadurch gekennzeichnet, dass** die Überstromerkennungsschaltung (51) einen 42. Widerstand (R42), einen 3. Kondensator (C3) und den 3. Abtastwiderstand (RS3) umfasst, wobei ein Ende des 42. Widerstandes (R42) an den CS-Stift des PFC-Steuerungschips (U4), ein anderes Ende des 42. Widerstandes (R42) an die Source des MOS-Transistors (Q5) angeschlossen ist, der CS-Stift des PFC-Steuerungschips (U4) über den 3. Kondensator (C3) geerdet ist.

6. Anpaßschaltung nach Anspruch 2, **dadurch gekennzeichnet, dass** die Brückenwechselrichterschaltung (60) eine Wechselrichterbrücke mit einem 1. MOS-Transistor (Q1), einem 2. MOS-Transistor (Q2), einem 3. MOS-Transistor (Q3) und einen 4. MOS-Translstir (Q4) umfasst,
wobei Gates des 1. MOP-Transistors (Q1), des 2. MOS-Transistors (Q2), des 3. MOS-Transistors (Q3) und des 4. MOS-Transistors (Q4) jeweils an eine MOS-Antriebsschaltung angeschlossen ist, und die MOS-Antriebsschaltung an ein entsprechendes Regelende der Wechselrichtersteuerung (80) angeschlossen ist;
eine Source des 2. MOS-Transistors (Q2) ein FireWire-Ende der AC-Ausgangsklemme (70) ist und eine Source des 3. MOS-Transistors (Q3) ein Nulllinienende der AC-Ausgangsklemme (70) ist.

7. Anpaßschaltung nach Anspruch 2, **dadurch gekennzeichnet, dass** die Ausgangsstromerkennungsschaltung (81) einen 2. Widerstand (R2) und einen 2. Abtastwiderstand (RS2) umfasst; wobei ein Ende des 2. Widerstandes (R2) an Sources des 1. MOS-Transistors (Q1) und des 4. MOS-Transistors (Q4) angeschlossen ist, und ein anderes Ende des 2. Widerstandes (R2) an die Wechselrichtersteuerung (80) angeschlossen ist; und wobei ein Ende des 2. Abtastwiderstandes (RS2) an die Sources des 1. MOS-Transistors (Q1) und des 4. MOS-Transistors (Q4) angeschlossen ist und ein anderes Ende des 2. Abtastwiderstandes (RS2) geerdet ist.

8. Intelligenter Reise-Spannungswandler, **dadurch gekennzeichnet, dass** der intelligente Reise-Spannungswandler die automatische Step-Up-Anpaßschaltung nach einem der Ansprüche 1 - 7 umfasst.

## Revendications

1. Un circuit élévateur de tension à adaptation automatique, comprenant :
une borne d'entrée de courant alternatif (CA) (10) connectée à une source d'alimentation externe pour appliquer un premier courant alternatif dans une plage de tension prédéterminée ;
un circuit de filtrage redresseur (20) connecté à la borne d'entrée CA (10) pour redresser et filtrer les formes d'onde du premier courant alternatif pour former un courant continu (CC) ;
un circuit de commutation (30) connecté au circuit de filtre redresseur (20), dans lequel, en réponse à des signaux de commande, le circuit de commutation (30) est mis en fonctionnement ou mis hors fonctionnement pour délivrer une première tension d'impulsion ;
un circuit convertisseur élévateur de tension (40) connecté au circuit de commutation (30) pour exécuter un processus d'élévation de tension vers la première tension d'impulsion de manière à produire une deuxième tension d'impulsion ;
un circuit de commande PFC connecté au circuit de commutation (30) et au circuit convertisseur élévateur de tension (40), dans lequel le circuit de commande PFC est configuré pour commander une largeur d'impulsion de la première tension impulsionnelle délivrée par le circuit de commutation ;
un circuit inverseur en pont (60) connecté au circuit convertisseur élévateur de tension (40), dans lequel le circuit inverseur en pont (60) est configuré pour convertir la deuxième tension impulsionnelle en un deuxième courant alternatif ; une borne de sortie de courant alternatif (70) étant connectée au circuit inverseur en pont (60) pour délivrer le deuxième courant alternatif ; et
un circuit de commande d'inverseur connecté à la borne de sortie de courant alternatif et au circuit inverseur en pont, le circuit de commande d'inverseur étant configuré pour commander un rapport cyclique de service de forme d'onde délivrée du circuit inverseur en pont (60) de façon à stabiliser le deuxième CA ;
le circuit de commande PFC comprenant :
un circuit de détection et de retour de tension (50) connecté au circuit convertisseur élévateur de tension (40), le circuit de détection et de retour de tension (50) étant configuré pour détecter la deuxième tension d'impulsion afin de générer une tension de retour ;
un circuit de détection de surintensité (51) connecté au circuit de commutation (30), le circuit de détection de surintensité (51) étant configuré pour détecter une sortie de courant par le circuit de commutation (30) de manière à générer un courant de retour ; et
un contrôleur PFC (52) comprenant une borne de retour connectée au circuit de détection et de retour de tension (50),
une borne de détection de courant connectée au circuit de détection de surintensité (51) et une borne de commande connectée au circuit de commutation (30), le contrôleur PFC étant configuré pour, à la lumière du courant de retour et de la tension de retour, délivrer les signaux de commande pour commander une largeur d'impulsion de la première tension d'impulsion ;
**caractérisé en ce que** le circuit de commutation (30) comprend un transistor MOS (Q5) et un circuit de commande de commutateur (301), un drain du transistor MOS (Q5) étant connecté à une borne de sortie positive du circuit de filtre redresseur (20) via une inductance élévatrice de tension (L1), un portail du transistor MOS (Q5) étant connectée à la borne de commande du contrôleur PFC (52) via le circuit de commande de commutation (301), et une source du transistor MOS (Q5) étant connecté à une borne de sortie négative du circuit de filtre redresseur (20) par l'intermédiaire d'une troisième résistance d'échantillonnage (RS3),
le circuit de commutation (30) comprenant une résistance (R40), le circuit de commande de commutation (301) comprenant une diode (D16) et un transistor PNP (Q2), et une extrémité de la résistance (R40) est connectée à une cathode de la diode (D16) et un émetteur du transistor PNP (Q2).

2. Le circuit élévateur de tension à adaptation automatique selon la revendication 1, **caractérisé en ce que** le circuit de commande d'inverseur comprend :
un circuit de détection de tension de sortie (82) connecté à la borne de sortie de CA (70) pour échantillonner des tensions du deuxième courant alternatif de manière à générer une première tension d'échantillonnage ;
un circuit de détection de courant de sortie (81) connecté à la borne de sortie de courant alternatif (70) pour échantillonner des courants du deuxième courant alternatif de manière à générer un premier courant d'échantillonnage ; et
un contrôleur inverseur (80) connecté au circuit de détection de tension de sortie (82), au circuit de détection de courant de sortie (81) et au circuit inverseur en pont (60), le contrôleur d'inverseur étant configuré pour, en fonction de la première tension d'échantillonnage et dy premier courant d'échantillonnage, commander un rapport de cycle de service de la forme d'onde délivrée du circuit inverseur en pont (60) de manière à stabiliser le deuxième courant alternatif.

3. Le circuit élévateur de tension à adaptation automatique selon la revendication 1, **caractérisé en ce que** le circuit convertisseur élévateur de tension (40) comprend une diode élévatrice de tension (D15), un condensateur de filtrage CC élévateur de tension (CE5), et l'inductance élévatrice de tension (L1), une anode de la diode d'élévation de tension (D15) étant connectée au drain du transistor MOS (Q5), une cathode de la diode d'élévation de tension (D15) étant connectée à un pôle positif du condensateur de filtrage CC élévateur de tension (CE5) et au circuit inverseur en pont (60), un pôle négatif du condensateur de filtrage CC élévateur de tension (CE5) étant mis à la terre.

4. Le circuit élévateur de tension à adaptation automatique selon la revendication 1, **caractérisé en ce que** le contrôleur PFC (52) comprend une puce de commande PFC (U4), une broche INV et une broche COMP de la puce de commande PFC (U4) étant la borne de retour du contrôleur PFC (52), une broche CS de la puce de commande PFC (U4) étant la borne de détection de courant du contrôleur PFC (52) ;
le circuit de détection et de retour de tension (50) comprend un circuit d'échantillonnage de tension (521), une quarante et unième résistance (R41), un huitième condensateur (C8) et un neuvième condensateur (C9), la broche INV de la puce de commande PFC (U4) étant connectée au circuit convertisseur élévateur de tension (40) par l'intermédiaire du circuit d'échantillonnage de tension (521), une extrémité de la quarante et unième résistance (R41) étant connectée à la broche INV de la puce de commande PFC (U4), une autre extrémité de la quarante-et-unième résistance (R41) étant connectée à la broche COMP de la puce de commande PFC (U4) via le neuvième condensateur (C9), le huitième condensateur (C8) étant connecté entre la broche INV de la puce de commande PFC (U4) et la broche COMP de la puce de commande PFC (U4).

5. Le circuit élévateur de tension à adaptation automatique selon la revendication 4, **caractérisé en ce que** le circuit de détection de surintensité (51) comprend une quarante deuxième résistance (R42), un troisième condensateur (C3) et la troisième résistance d'échantillonnage (RS3), une extrémité de la quarante-deuxième résistance (R42) étant connectée à la broche CS de la puce de commande PFC (U4), une autre extrémité de la quarante-deuxième résistance (R42) étant connectée à la source du transistor MOS (Q5), la broche CS de la puce de commande PFC (U4) est mise à la terre par l'intermédiaire du troisième condensateur (C3).

6. Le circuit élévateur de tension à adaptation automatique selon la revendication 2, **caractérisé en ce que** le circuit inverseur en pont (60) comprend un pont inverseur ayant un premier transistor MOS (Q1), un deuxième transistor MOS (Q2), un troisième transistor MOS (Q3) et un quatrième transistor MOS (Q4),
les portails du premier transistor MOS (Q1), du deuxième transistor MOS (Q2), du troisième transistor MOS (Q3) et du quatrième transistor MOS (Q4) étant respectivement connectés à un circuit de commande MOS, et le circuit de commande MOS étant connecté à une extrémité de commande correspondante du contrôleur d'inverseur (80) ;
une source du deuxième transistor MOS (Q2) est une extrémité de fil de feu de la borne de sortie de CA (70), et une source du troisième transistor MOS (Q3) est une extrémité de ligne zéro de la borne de sortie de CA (70).

7. Le circuit élévateur de tension à adaptation automatique selon la revendication 2, **caractérisé en ce que** le circuit de détection de courant de sortie (81) comprend une deuxième résistance (R2) et une deuxième résistance d'échantillonnage (RS2) ; une extrémité de la deuxième résistance (R2) est connectée à des sources du premier transistor MOS (Q1) et du quatrième transistor MOS (Q4), et une autre extrémité de la deuxième résistance (R2) est connectée au contrôleur d'inverseur (80) et une extrémité de la deuxième résistance d'échantillonnage (RS2) est connectée aux sources du premier transistor MOS (Q1) et du quatrième transistor MOS (Q4), et une autre extrémité de la deuxième résistance d'échantillonnage (RS2) est mise à la terre.

8. Un dispositif de conversion d'énergie intelligent, utilisable en voyage, **caractérisé en ce que** le dispositif de conversion d'énergie intelligent, utilisable en voyage, comprend le circuit d'adaptation automatique d'élévation de tension selon l'une quelconque des revendications 1 à 7.
